(19) Europäisches Patentamt
European Patent Office
Office européen des brevets

(11) **EP 4 030 759 A1**

(12) **EUROPEAN PATENT APPLICATION**
published in accordance with Art. 153(4) EPC

(43) Date of publication:
**20.07.2022 Bulletin 2022/29**

(21) Application number: **20863601.9**

(22) Date of filing: **21.08.2020**

(51) International Patent Classification (IPC):
**H04N 19/436** (2014.01)     **H04N 19/70** (2014.01)

(52) Cooperative Patent Classification (CPC):
**H04N 19/436; H04N 19/70**

(86) International application number:
**PCT/JP2020/031711**

(87) International publication number:
**WO 2021/049277 (18.03.2021 Gazette 2021/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.09.2019   JP 2019165580**

(71) Applicant: **CANON KABUSHIKI KAISHA OHTA-KU Tokyo 146-8501 (JP)**

(72) Inventors:
• **OKAWA, Koji**
  **Tokyo 146-8501 (JP)**
• **ENOKIDA, Miyuki**
  **Tokyo 146-8501 (JP)**
• **SHIMA, Masato**
  **Tokyo 146-8501 (JP)**

(74) Representative: **Canon Europe Limited European Intellectual Property Group 4 Roundwood Avenue Stockley Park Uxbridge UB11 1AF (GB)**

(54)     **IMAGE CODING DEVICE AND IMAGE DECODING DEVICE**

(57)     An image encoding apparatus comprising encoding means for dividing an image into a plurality of sub-pictures and encoding each sub-picture such that each sub-picture can independently be decoded, comprises first decision means for deciding whether each sub-picture that forms the image is defined as only one rectangle, second decision means for deciding a basic pixel count that is a vertical/horizontal size of a grid that forms the sub-picture, assigning means for assigning a number to each grid divided by the basic pixel count, and third decision means for deciding the maximum number of sub-pictures, which is the number of numbers assigned by the assigning means, and the sub-picture is a set of grids assigned identical numbers, and a value obtained by subtracting 2 from the maximum number decided by the third decision means is encoded.

F I G.  1

EP 4 030 759 A1

**Description**

TECHNICAL FIELD

The present invention relates to an image encoding apparatus, an image encoding method, and a program, an image decoding apparatus, an image decoding method, and a program, and image code data and, more particularly, to an image encoding method/decoding method capable of dividing a picture into rectangles and extracting independent code data.

BACKGROUND ART

As an encoding method for compression recording of a moving image, an HEVC (High Efficiency Video Coding) encoding method (to be referred to as HEVC hereinafter) is known. In the HEVC, to improve the encoding efficiency, a basic block with a size larger than a conventional macroblock (16 × 16 pixels) is employed. The basic block of the large size is called a CTU (Coding Tree Unit), and its size is 64 × 64 pixels at maximum. The CTU is further divided into sub-blocks that are units to perform prediction or conversion.

Also, in the HEVC, a picture can be divided into a plurality of tiles or slices and encoded. The tiles or slices have little data dependence, and encoding/decoding processing can be executed in parallel. One of great advantages of the tile or slice division is that processing can be executed in parallel by a multicore CPU or the like to shorten the processing time. PTL 1 discloses a technique associated with tiles and slices.

In recent years, activities for international standardization of a more efficient encoding method that is the successor to the HEVC have been started. JVET (Joint Video Experts Team) has been established between ISO/IEC and ITU-T, and a VVC (Versatile Video Coding) encoding method (to be referred to as VVC hereinafter) has been standardized. In the VVC, a sub-picture configured to include one or more slices and form a rectangle exists. A picture can be divided into one or more sub-pictures, and each sub-picture can be processed as independent code data.

CITATION LIST

PATENT LITERATURE

PTL 1: Japanese Patent Laid-Open No. 2014-11638

SUMMARY OF INVENTION

TECHNICAL PROBLEM

Concerning sub-pictures of VVC, a value representing the maximum number of sub-pictures, a basic pixel count such as the vertical/horizontal size of a grid that defines the boundary positions of each sub-picture, the ID of each sub-picture, a control flag corresponding to each sub-picture, and the like are defined as a syntax.

Many redundant parts still remain in the syntax concerning sub-pictures, resulting in an increase in the code amount.

Hence, the present invention has been made to solve the above-described problem, and provides a technique for decreasing the code amount of a generated bitstream by eliminating the redundancy of a syntax concerning sub-pictures.

SOLUTION TO PROBLEM

In order to solve the above-described problem, an image encoding apparatus according to the present invention has the following configuration. That is, the image encoding apparatus is an image encoding apparatus comprising encoding means for dividing an image into a plurality of sub-pictures and encoding each sub-picture such that each sub-picture can independently be decoded, characterized by comprising first decision means for deciding whether each sub-picture that forms the image is defined as only one rectangle, second decision means for deciding a basic pixel count that is a vertical/horizontal size of a grid that forms the sub-picture, assigning means for assigning a number to each grid divided by the basic pixel count, and third decision means for deciding the maximum number of sub-pictures, which is the number of numbers assigned by the assigning means, wherein the sub-picture is a set of grids assigned identical numbers, and a value obtained by subtracting 2 from the maximum number decided by the third decision means is encoded.

In addition, an image decoding apparatus according to the present invention has the following configuration. That is, the image decoding apparatus is an image decoding apparatus comprising image decoding means capable of decoding a bitstream including code data obtained by encoding for each of a plurality of sub-pictures, characterized by comprising first acquisition means for acquiring, from the bitstream, information representing whether each sub-picture that forms the image includes the only one rectangle, second acquisition means for acquiring the maximum number of sub-pictures from the bitstream, and third acquisition means for acquiring, from the bitstream, a basic pixel count that is a vertical/horizontal size of a grid that forms the sub-picture, wherein a value obtained by adding 2 to a numerical value acquired from the second acquisition means is set to the maximum number of sub-pictures, the number of vertical/horizontal grids that form the image is acquired from the vertical/horizontal size of the grid acquired from third acquisition means, and information representing which sub-picture each grid belongs to is acquired.

Also, an image encoding apparatus according to the present invention has the following configuration. That is, the image encoding apparatus is an image encoding apparatus comprising encoding means for dividing an image into a plurality of sub-pictures and encoding each sub-picture such that each sub-picture can independently be decoded, characterized by comprising first decision means for deciding whether each sub-picture that forms the image is defined as only one rectangle, second decision means for deciding a basic pixel count that is a vertical/horizontal size of a grid that forms the sub-picture, assigning means for assigning a number to each grid divided by the basic pixel count, and third decision means for deciding the maximum number of sub-pictures, which is the number of numbers assigned by the assigning means, wherein the sub-picture is a set of grids assigned identical numbers, and only when the maximum number decided by the third decision means is not less than 2, the number and the basic pixel count are encoded.

In addition, an image decoding apparatus according to the present invention has the following configuration. That is, the image decoding apparatus is an image decoding apparatus comprising image decoding means capable of decoding a bitstream including code data obtained by encoding for each of a plurality of sub-pictures, characterized by comprising first acquisition means for acquiring, from the bitstream, information representing whether each sub-picture that forms the image includes the only one rectangle, second acquisition means for acquiring the maximum number of sub-pictures from the bitstream, and third acquisition means for acquiring, from the bitstream, a basic pixel count that is a vertical/horizontal size of a grid that forms the sub-picture, wherein the sub-picture is a set of grids assigned identical numbers, and only when the maximum number decided by the second acquisition means is not less than 2, the number and the basic pixel count are acquired.

ADVANTAGEOUS EFFECTS OF INVENTION

According to the present invention, it is possible to efficiently encode a syntax concerning sub-pictures that form an image and improve the encoding efficiently.

Other features and advantages of the present invention will be apparent from the following description taken in conjunction with the accompanying drawings. Note that the same reference numerals denote the same or like components throughout the accompanying drawings.

BRIEF DESCRIPTION OF DRAWINGS

The accompanying drawings, which are incorporated in and constitute a part of the specification, illustrate embodiments of the invention and, together with the description, serve to explain principles of the invention.

Fig. 1 is a block diagram showing the configuration of an image encoding apparatus;
Fig. 2 is a block diagram showing the configuration of an image decoding apparatus;
Fig. 3 is a flowchart showing image encoding processing in the image encoding apparatus;
Fig. 4 is a flowchart showing image decoding processing in the image decoding apparatus;
Fig. 5 is a block diagram showing an example of a hardware configuration;
Fig. 6 is a view showing a bitstream configuration;
Fig. 7 is a view showing an example of division of an image;
Fig. 8 is a view showing an example of division of an image;
Fig. 9 is a view showing a bitstream configuration;
Fig. 10 is a view showing an example of division of an image; and
Fig. 11 is a view showing a bitstream configuration.

DESCRIPTION OF EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

(First Embodiment)

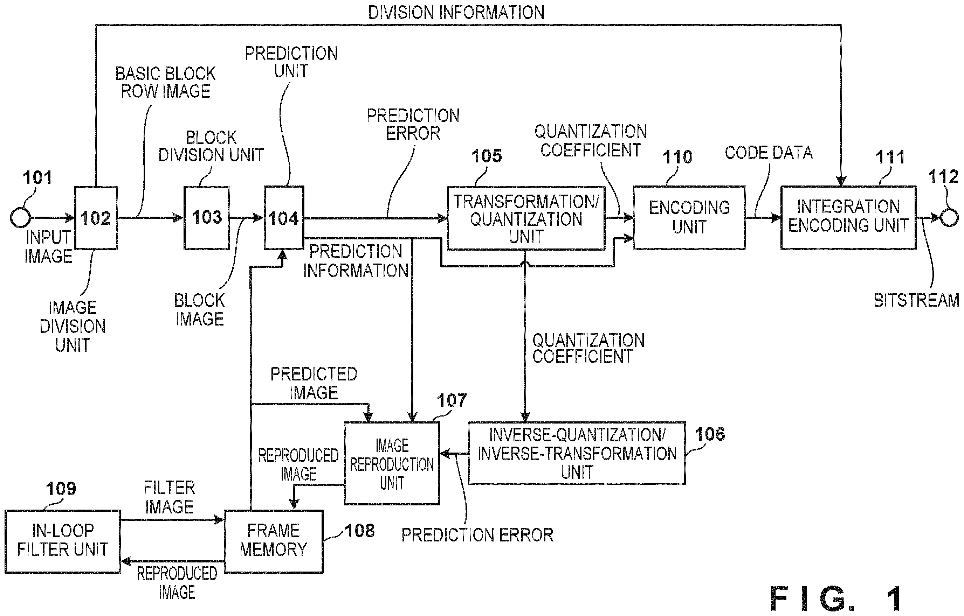

An embodiment of the present invention will now be described with reference to the accompanying drawings. Fig. 1 is a block diagram showing an image encoding apparatus according to this embodiment. Referring to Fig. 1, reference numeral 101 denotes a terminal configured to input image data.

Reference numeral 102 denotes an image division unit that divides an input image into one or a plurality of tile rows or one or a plurality of tile columns. Each tile is a set of continuous basic blocks, which covers a rectangular region in the image. The image division unit 102 further divides a tile into one or a plurality of bricks. Each brick is a rectangle formed by one or a plurality of basic block rows that are the rows of basic blocks in a tile. The image division unit 102 divides the image into slices each formed from one or a plurality of tiles in the image or one or more bricks in one tile. The slice is the basic unit of encoding, and header information such as information representing a type of slice is added to each slice.

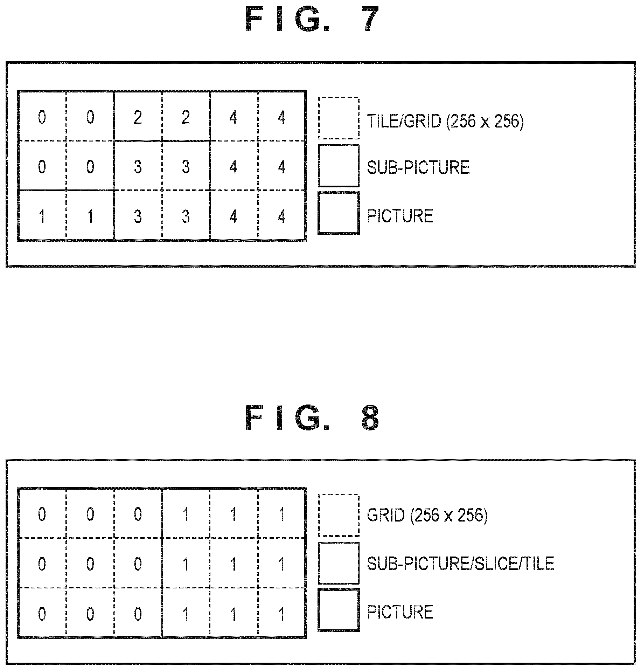

In this embodiment, as shown in Fig. 8, a picture is divided into two sub-pictures. Also, to make a simple description, a sub-picture, a slice, a tile, and a brick have the same vertical/horizontal size and the same position. However, the present invention is not limited to this.

Reference numeral 103 denotes a block division unit that divides a basic block row image output from the image division unit 102 into a plurality of basic blocks, and outputs the image of each basic block to the subsequent stage.

Reference numeral 104 denotes a prediction unit that decides sub-block division for the image data of each basic block, and performs, for each sub-block, intra-prediction that is intra-frame prediction or inter-prediction that is inter-frame prediction, thereby generating predicted image data. Intra-prediction or motion vector prediction across the bricks is not performed. Also, the prediction unit 104 calculates a prediction error from the input image data and the predicted image data and outputs the prediction error. In addition, the prediction unit 104 outputs information necessary for prediction, for example, pieces of information such as sub-block division, a prediction mode, and a motion vector together with the prediction error. The information necessary for prediction will be referred to as prediction information hereinafter.

Reference numeral 105 denotes a transformation/quantization unit that orthogonally transforms the prediction error on a sub-block basis to obtain a transformation coefficient, and further quantizes the transformation coefficient to obtain a quantization coefficient. Reference numeral 106 denotes an inverse quantization/inverse transformation unit that inversely quantizes the quantization coefficient output from the transformation/quantization unit 105 to reproduce the transformation coefficient, and also inversely orthogonally transforms the transformation coefficient to reproduce the prediction error. Reference numeral 108 denotes a frame memory that stores reproduced image data.

Reference numeral 107 denotes an image reproduction unit. The image reproduction unit 107 generates predicted image data by appropriately referring to the frame memory 108 based on the prediction information output from the prediction unit 104, generates reproduced image data from the predicted image data and the input prediction error, and outputs the reproduced image data. Reference numeral 109 denotes an in-loop filter unit. The in-loop filter unit 109 performs in-loop filter processing such as deblocking filter processing or sample adaptive offset for the reproduced image, and outputs the image that has undergone the filter processing.

Reference numeral 110 denotes an encoding unit. The encoding unit 110 generates code data by encoding the quantization coefficient output from the transformation/quantization unit 105 and the prediction information output from the prediction unit 104, and outputs the code data. Reference numeral 111 denotes an integration encoding unit. The integration encoding unit 111 receives division information from the image division unit 102, and generates header code data. The integration encoding unit 111 also forms a bitstream by combining the header code data with the code data output from the encoding unit 110, and outputs the bitstream. Reference numeral 112 denotes a terminal that outputs the bitstream generated by the integration encoding unit 111 to the outside.

The image encoding operation of the image encoding apparatus according to the first embodiment will be described below. In this embodiment, moving image data is input on a frame basis. However, still image data corresponding to one frame may be input. Also, in this embodiment, to facilitate the description, only intra-prediction coding processing will be described. However, the present invention is not limited to this, and can also be applied to inter-prediction coding processing. Also, in this embodiment, for the sake of description, the description will be made assuming that the block division unit 103 divides an image into basic blocks each having a size of 64 × 64 pixels. However, the present invention is not limited to this.

In this embodiment, first, image data of one frame input from the terminal 101 is divided by the image division unit 102 into sub-pictures as shown in Fig. 8. In this embodiment, a case in which one image data is divided into two sub-pictures, and is formed by 18 grids will be described. The vertical/horizontal size of one grid is 256 × 256 pixels, and the vertical/horizontal size of a sub-picture is 768 × 768 pixels. For each grid of the sub-picture on the left side, 0 is set as an INDEX value. For each grid of the sub-picture on the right side, 1 is set as an INDEX value. As described above, in this embodiment, one image data is sectioned into a plurality of grids, and is divided into a plurality of sub-pictures based on the plurality of grids. Also, each grid is assigned the INDEX value as a number, and the grids that form one sub-picture are assigned the same INDEX value.

In this embodiment, each sub-picture is formed by one slice, and one tile/one brick. Information about the size of the sub-picture or slice is sent as division information to the integration encoding unit 111. In addition, each brick is divided into basic block row images, each of which is image data of each basic block row, and sent to the block division unit 103.

The block division unit 103 divides the input basic block row image into a plurality of basic blocks, and outputs the image of each basic block to the prediction unit 104. In this embodiment, the image of each basic block having a size of 64 × 64 pixels is output.

The prediction unit 104 executes prediction processing for the image data of each basic block input from the block division unit 103. More specifically, sub-block division for dividing the basic block into finer sub-blocks is decided, and an intra-prediction mode such as horizontal prediction or vertical prediction is decided on a sub-block basis.

Predicted image data is generated based on the decided intra-prediction mode and encoded pixels. Furthermore, a prediction error is generated from the input image data and the predicted image data and output to the transformation/quantization unit 105. In addition, the information of sub-block division or the intra-prediction mode is output as prediction information to the encoding unit 110 and the image reproduction unit 107.

The transformation/quantization unit 105 performs orthogonal transformation/quantization for the input prediction error, thereby generating a quantization coefficient. First, orthogonal transformation processing corresponding to the size of the sub-block is performed to generate an orthogonal transformation coefficient. Next, the orthogonal transformation coefficient is quantized to generate a quantization coefficient. The generated quantization coefficient is output to the encoding unit 110 and the inverse quantization/inverse transformation unit 106.

The inverse quantization/inverse transformation unit 106 inversely quantizes the input quantization coefficient to reproduce the transformation coefficient, and further inversely orthogonally transforms the reproduced transformation coefficient to reproduce the prediction error. The reproduced prediction error is output to the image reproduction unit 107.

The image reproduction unit 107 reproduces a predicted image by appropriately referring to the frame memory 108 based on the prediction information input from the prediction unit 104. Then, image data is reproduced from the reproduced predicted image and the reproduced prediction error input from the inverse quantization/inverse transformation unit 106. The image data is input to and stored in the frame memory 108.

The in-loop filter unit 109 reads out the reproduced image from the frame memory 108, and performs in-loop filter processing such as deblocking filter processing. The image that has undergone the filter processing is input to the frame memory 108 again and stored again.

The encoding unit 110 entropy-encodes the quantization coefficient generated by the transformation/quantization unit 105 and the prediction information input from the prediction unit 104 on a block basis, thereby generating code data. The method of entropy encoding is not particularly designated, and Golomb coding, arithmetic encoding, Huffman coding, or the like can be used. The generated code data is output to the integration encoding unit 111.

The integration encoding unit 111 receives the division information from the image division unit 102, generates encoded data of a header, and multiplexes the code data and the like input from the encoding unit 110, thereby forming a bitstream. Finally, the bitstream is output from the terminal 112 to the outside.

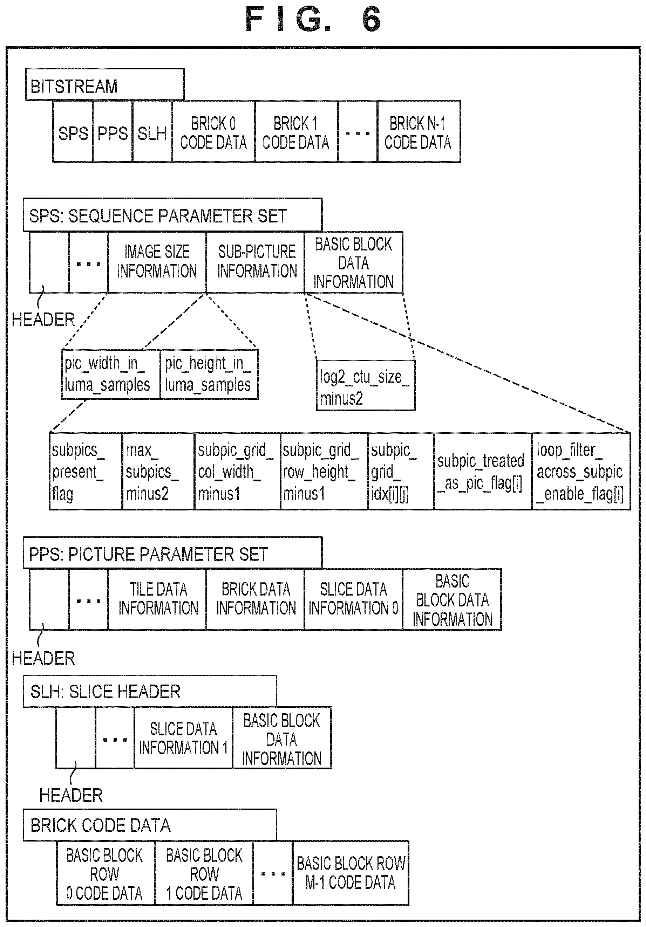

The format of encoded data by the VVC, which is encoded by the image encoding apparatus according to this embodiment, is shown in Fig. 6. In the encoded data shown in Fig. 6, first, a sequence parameter set that is header information including information concerning encoding of a sequence exists. A picture parameter set that is header information including information concerning encoding of a picture, a slice header that is header information including information concerning encoding of each slice, and encoded data of each brick follow.

In the sequence parameter set, pic_width_in_luma_samples and pic_height_in_luma_samples exist as image size information. These represent the number of pixels in the horizontal direction and the number of pixels in the vertical direction concerning the brightness of an image. In this embodiment, since the image shown in Fig. 8 is encoded, pic_width_in_luma_samples is 1536, and pic_height_in_luma_samples is 768. In addition, as basic block data division information, log2_ctu_size_minus2 representing the size of a basic block exists. The number of vertical and horizontal pixels of the basic block is represented by $1 << (\text{log2\_ctu\_size\_minus2} + 2)$. In this embodiment, since the basic block has $64 \times 64$ pixels, the value of log2_ctu_size_minus2 is 4.

Furthermore, as sub-picture information, subpics_present_flag that is information representing whether sub-picture division is present exists. If subpics_present_flag is 1, this indicates that the image is divided into one or more sub-pictures. If subpics_present_flag is 0, this indicates that the image is not divided.

If subpics_present_flag is 1, the following pieces of information are also encoded. That is, the pieces of information encoded at this time include, for example, max_subpics_minus2 representing the maximum number of sub-pictures. In addition, the pieces of information encoded at this time include, for example, information such as subpic_grid_col_width_minus1 and subpic_gridrow height minus1, which represent the basic pixel count of a grid. Also, the pieces of information encoded at this time include, for example, information such as subpic_grid_idx[i][j] as an INDEX value. Also, the pieces of information encoded at this time include, for example, information such as subpic _treated_as_pic_flag[i] and loop _filter_across_subpic_enabled_flag[i] concerning filtering.

Conventionally, the maximum number of sub-pictures is expressed as "maximum number - 1". In this case, the maximum number of sub-pictures is 1, that is, one sub-picture exists, and the design is made such that the code amount is minimized in a state in which the image is not divided in actuality. In this embodiment, however, the maximum number of sub-pictures is expressed as "maximum number - 2". If an image is divided into two sub-pictures, the value of max_subpics_minus2 is 0, and it is possible to make an expression by a minimum code amount.

The picture parameter set includes tile data information, brick data information, slice data information, and basic block data information. The slice header includes slice data information and the like, and encoded data of each brick follows.

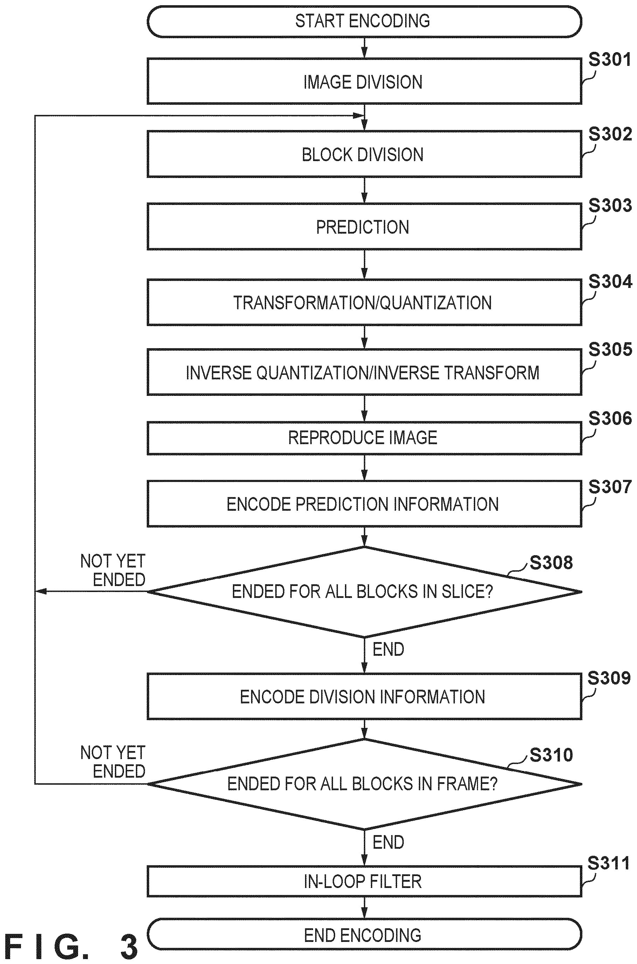

Fig. 3 is a flowchart showing encoding processing in the image encoding apparatus according to the first embodiment. First, in step S301, the image division unit 102 divides an image into tiles, bricks, and slices, as described above, and sends division information to the integration encoding unit 111. The division information is converted into header information and encoded into a bitstream by the integration encoding unit 111 in step S309. The image division unit 102 also divides the image into sub-pictures and sends these to the block division unit 103.

In step S302, the block division unit 103 divides a basic block row image into basic blocks. In step S303, the prediction unit 104 executes prediction processing for the image data of each basic block generated in step S302, thereby generating sub-block division information, prediction information such as an intra-prediction mode, and predicted image data. The prediction unit 104 also calculates a prediction error from the input image data and the predicted image data.

In step S304, the transformation/quantization unit 105 orthogonally transforms the prediction error calculated in step S303 to generate a transformation coefficient, and performs quantization to generate a quantization coefficient.

In step S305, the inverse quantization/inverse transformation unit 106 inversely quantizes the quantization coefficient generated in step S304, thereby reproducing the transformation coefficient. The inverse quantization/inverse transformation unit 106 also inversely orthogonally transforms the transformation coefficient, thereby reproducing the prediction error.

In step S306, the image reproduction unit 107 reproduces the predicted image based on the prediction information generated in step S303. The image reproduction unit 107 also reproduces the image data from the reproduced predicted image and the prediction error generated in step S305.

In step S307, the encoding unit 110 encodes the prediction information generated in step S303 and the quantization coefficient generated in step S304, thereby generating code data.

In step S308, the image encoding apparatus determines whether encoding of all basic blocks in a slice is ended. If the encoding is ended, the process advances to step S309. Otherwise, the process returns to step S302 to process the next basic block.

In step S309, the integration encoding unit 111 generates header information based on the division information sent from the image division unit 102 and performs encoding.

A detailed example in this embodiment will be described based on the image division shown in Fig. 8. In this embodiment, since the image is divided into two sub-pictures, subpics_present_flag is 1. Next, the value of "maximum number - 2", that is, "0" in this embodiment is set for max_subpics_minus2 representing the maximum number of sub-pictures. If this information is encoded by Golomb coding, 1-bit data "0" representing "0" is encoded. This can increase the encoding efficiency as compared to a case in which 3-bit data "010" representing a value "1" is encoded.

subpic_grid_col_width_minus1 is 63, and subpic_grid_row_height_minus1 is also 63. The two values are defined in units of four pixels and, more specifically, these are values obtained by subtracting 1 from a value obtained by dividing the basic pixel count of a grid by 4.

There exists subpic_grid_idx[i][j] as the INDEX value of a sub-picture. Here, [i][j] indicates the position of a grid, where i represents a Row direction, and j represents a Col direction. In this embodiment, the Row direction ranges from 0 to 2, the Col direction ranges from 0 to 5, and [0][0], [0][1], [0][2], [1][0], [1][1], [1][2], [2][0], [2][1], and [2][2] are 0. In addition, [0][3], [0][4], [0][5], [1][3], [1][4], [1][5], [2][3], [2][4], and [2][5] are 1. The code data of slices that form a sub-picture are joined based on these pieces of sub-picture information, thereby creating the code data of the sub-picture.

In step S310, the image encoding apparatus determines whether encoding of all basic blocks in a frame is ended. If the encoding is ended, the process advances to step S311. Otherwise, the process returns to step S302 to process the next basic block.

In step S311, the in-loop filter unit 109 performs in-loop filter processing for the image data reproduced in step S306 to generate an image that has undergone the filter processing, and the processing is ended.

With the above-described configuration and operation, particularly in step S309, if the image is divided into sub-pictures, the information representing the maximum number of sub-pictures is encoded by "maximum number - 2", thereby efficiently encoding the syntax concerning the sub-picture.

Note that in this embodiment, a sub-picture is formed by one slice, one tile, or one brick. However, the present invention is not limited to this. Fig. 7 shows an example in which one slice is divided into a plurality of tiles. More specifically, each of slices of INDEX0 and INDEX3 is formed by four tiles, each of slices of INDEX1 and INDEX2 is formed by two tiles, and a slice of INDEX4 is formed by six tiles. The embodiment can also be applied to this sub-picture configuration. Note that in this case, a tile and a brick have the same basic pixel size.

Note that in this embodiment, a value obtained by subtracting 2 from the maximum number of sub-pictures is encoded. However, the present invention is not limited to this. Instead, max_subpics_minus1 obtained by subtracting 1 from the maximum number of sub-pictures may be encoded, and when the value is 1 or more, that is, only when the maximum number of sub-pictures is 2 or more, the following parameters may be encoded. That is, parameters such as subpic_grid_col_width_minus1, subpic_grid_row_height_minus1, and subpic_grid_idx[i][j] may be encoded. That is, if the maximum number is 1, the parameters may be omitted such that these are not encoded.

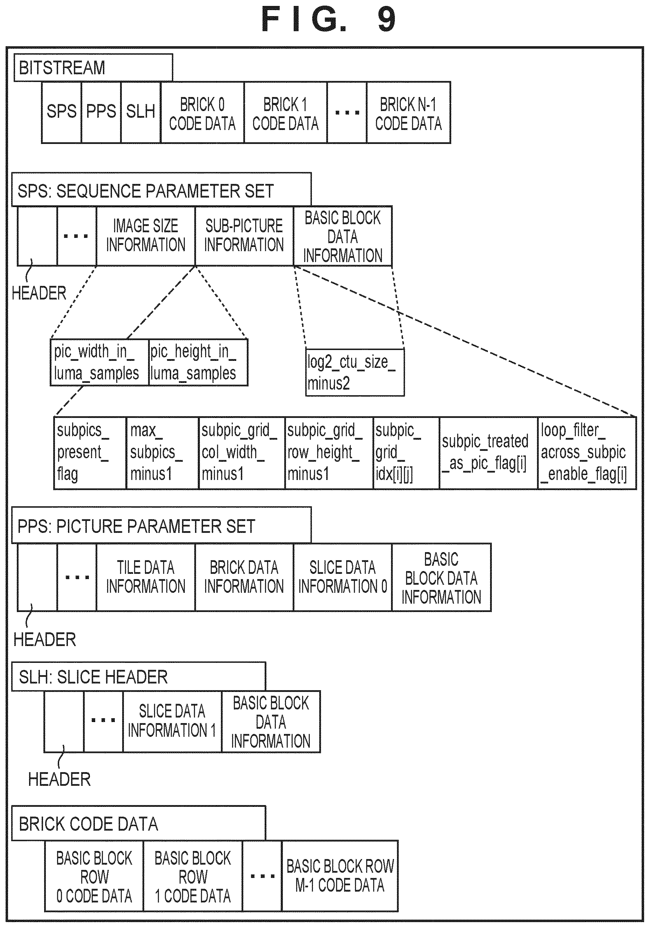

The format of encoded data at this time is shown in Fig. 9. In this case, when the maximum number of sub-pictures is 1, the information amount of subpic_grid_col_width_minus1, subpic_grid_row_height_minus1, and subpic_grid_idx[0][0] can be decreased. This makes it possible to efficiently perform encoding.

Note that in the above description, when the value of max_subpics_minus1 is 1, that is, only when the maximum number of sub-pictures 2 or more, the following parameters are encoded. That is, the parameters subpic_grid_col_width_minus1, subpic_grid_row_height_minus1, and subpic_grid_idx[i][j] are encoded when the maximum number of sub-pictures is 2 or more. Also, the following two values may be encoded only when the maximum number of sub-pictures is 2 or more. That is, subpic_treated_as_flag and loop_filter_across_subpic_enabled_flag may be encoded only when the value of max_subpics_minus1 is 1 or more. This makes it possible to further decrease the information amount and efficiently perform encoding.

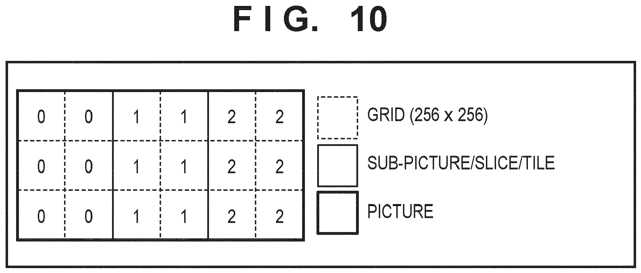

Also, in this embodiment, an example in which an image is divided into two sub-pictures has been described. An example in which an image is divided into, for example, three sub-pictures is shown in Fig. 10. A value that can be expressed by Ceil(Log2(max_subpics_minus1+1)) bits at maximum can be set to subpic_grid_idx. When a value of max_subpics_minus1 or less is used, efficient encoding is possible. More specifically, since the image is divided into three parts, the maximum number of sub-pictures is 3. Hence, max_subpics_minus1 is obtained as 2 by subtracting 1 from 3. The number of bits at this time is 2 as the calculation result of Ceil(Log2(2 + 1)), and a value that can be expressed by 2 bits can be set. More specifically, four types of values 0, 1, 2, and 3 can be set. When the settable maximum value is limited to max_subpics_minus1, the values are limited to 0, 1, and 2, as shown in Fig. 10, and the syntax concerning the sub-picture can correctly be encoded.

Additionally, in this embodiment, a grid is defined on a four-pixel basis. However, a grid may be defined on a CTU row/column basis. If the basic pixel count of CTU is 64 × 64, the value of subpic_grid_col_width_minus1 is 3, and the value of subpic_grid_row_height_minus1 is also 3. The information of the encoding target is small, and the code amount can be decreased.

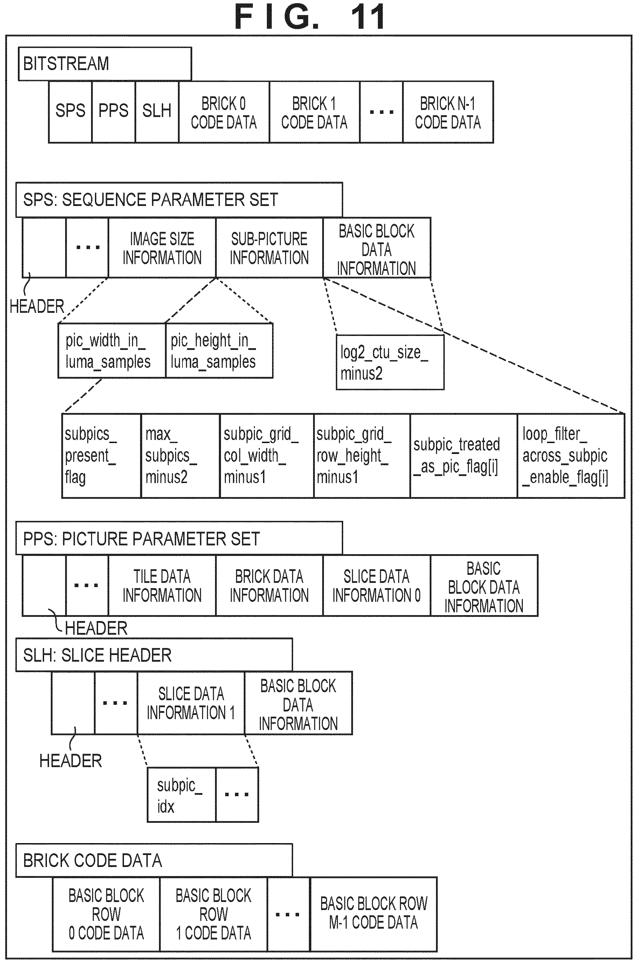

Note that in this embodiment, subpic_grid_idx that is an ID representing the position of the rectangular region of a sub-picture is encoded in the sequence parameter set. However, the present invention is not limited to this. Fig. 11 shows the configuration of a bitstream in which subpic idx as the ID of a corresponding sub-picture is encoded instead in a slice header that is the header of each slice. When this configuration is employed, the number of information representing the position of the rectangular region of a sub-picture can be decreased from the number of grids to the number of slices. In the example shown in Fig. 8, the number of grids is 18, and the number of sub-pictures = the number of slices. Hence, since the number of slices is 2, the number of information of the encoding target can be decreased from 18 to 2.

Additionally, subpic_idx is arranged in the slice header. However, the present invention is not limited to this, and subpic idx may be arranged in brick code data. This can decrease the code amount, as in the case in which subpic idx is stored in the slice header.

(Second Embodiment)

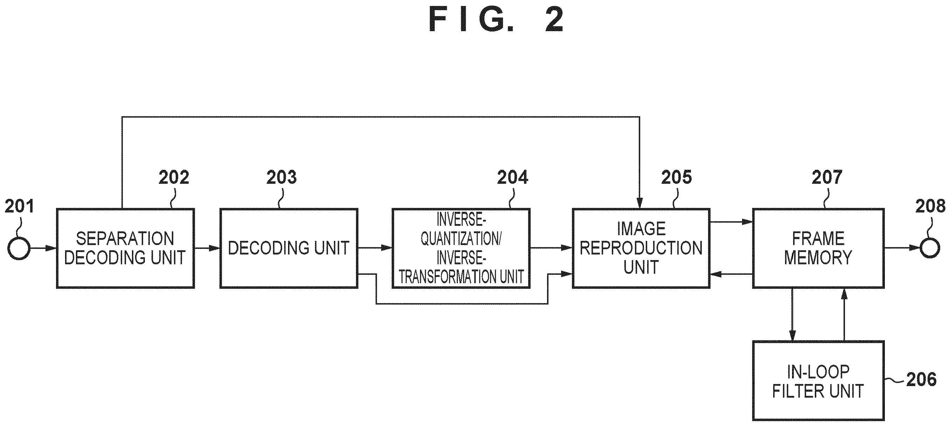

Fig. 2 is a block diagram showing the configuration of an image decoding apparatus according to the second embodiment of the present invention. The image decoding apparatus according to this embodiment can decode a bitstream including code data generated by performing encoding for each of a plurality of sub-pictures. In this embodiment, decoding of encoded data generated in the first embodiment will be described below as an example.

Reference numeral 201 denotes a terminal to which an encoded bitstream is input. Reference numeral 202 denotes a separation decoding unit that separates code data concerning information and coefficients concerning decoding processing from the bitstream and sends these to a decoding unit 203. Also, the separation decoding unit 202 decodes the code data that exists in the header portion of the bitstream. In this embodiment, division information is generated by decoding header information concerning image division, such as the sizes of tiles, bricks, slices, and basic blocks, and output to an image reproduction unit 205. The separation decoding unit 202 performs an operation reverse to that of the integration encoding unit 111 shown in Fig. 1.

Reference numeral 203 denotes a decoding unit that decodes the code data output from the separation decoding unit 202, thereby reproducing a quantization coefficient and prediction information. Reference numeral 204 denotes an inverse quantization/inverse transformation unit that inversely quantizes the quantization coefficient to obtain a transformation coefficient, and inversely orthogonally transforms the transformation coefficient to reproduce a prediction error. Reference numeral 206 denotes a frame memory 206 that stores the image data of a reproduced picture. Reference numeral 205 denotes an image reproduction unit. The image reproduction unit 205 generates predicted image data by appropriately referring to the frame memory 206 based on the input prediction information. The image reproduction unit 205 then generates reproduced image data from the predicted image data and the prediction error reproduced by the inverse quantization/inverse transformation unit 204. The positions of tiles, bricks, and slices in the frame are specified based on the division information input from the separation decoding unit 202, and the generated reproduced image data is output.

Reference numeral 207 denotes an in-loop filter unit. The in-loop filter unit 207 performs in-loop filter processing such as deblocking filter processing for the reproduced image, and outputs the image that has undergone the in-loop filter processing, like the above-described in-loop filter unit 109 shown in Fig. 1. Reference numeral 208 denotes a terminal that outputs the reproduced image data to the outside.

The image decoding operation of the image decoding apparatus according to this embodiment will be described below. In this embodiment, the bitstream generated in the first embodiment is input on a frame basis. However, a still image bitstream corresponding to one frame may be input. Also, in this embodiment, to facilitate the description, only intra-prediction decoding processing will be described. However, the present invention is not limited to this, and can also be applied to inter-prediction decoding processing.

In Fig. 2, a bitstream corresponding to one frame input from the terminal 201 is input to the separation decoding unit 202. The separation decoding unit 202 separates code data concerning information and coefficients concerning decoding processing from the bitstream and decodes the code data that exists in the header portion of the bitstream. More specifically, division information is generated by decoding basic block data division information, tile data division information, brick data division information, slice data division information, basic block row data synchronization information, and basic block row data position information shown in Fig. 6 and sent to the image reproduction unit 205. Next, code data of each basic block of the picture data is reproduced and output to the decoding unit 203.

The decoding unit 203 decodes the code data, thereby reproducing a quantization coefficient and prediction information. The reproduced quantization coefficient is output to the inverse quantization/inverse transformation unit 204, and the reproduced prediction information is output to the image reproduction unit 205.

The inverse quantization/inverse transformation unit 204 inversely quantizes the input quantization coefficient to generate an orthogonal transformation coefficient, and performs inverse orthogonal transformation to reproduce the prediction error. The reproduced prediction error is output to the image reproduction unit 205.

The image reproduction unit 205 reproduces the predicted image by appropriately referring to the frame memory 206 based on the prediction information input from the decoding unit 203. Image data is reproduced from the predicted image and the prediction error input from the inverse quantization/inverse transformation unit 204. The shapes and the positions of tiles, slices, and bricks in the frame, for example, as shown in Fig. 8, are specified based on the division information input from the separation decoding unit 202, and the generated reproduced image data is input to and stored in the frame memory 206. The stored image data is used for reference in prediction.

The in-loop filter unit 207 reads out the reproduced image from the frame memory 206, and performs in-loop filter processing such as deblocking filter processing, like the in-loop filter unit 109 shown in Fig. 1. The image that has undergone the filter processing is input to the frame memory 206 again. The reproduced image stored in the frame memory 206 is finally output from the terminal 208 to the outside.

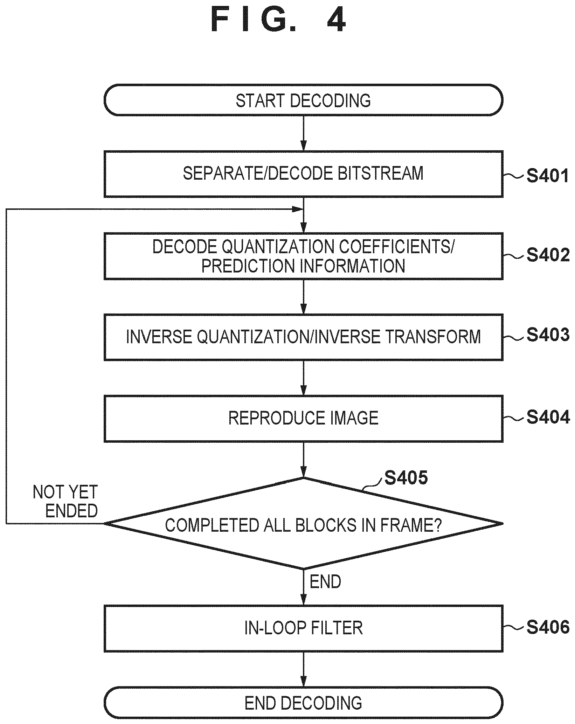

Fig. 4 is a flowchart showing image decoding processing in the image decoding apparatus according to the second embodiment. First, in step S401, the separation decoding unit 202 separates code data concerning information and coefficients concerning decoding processing from a bitstream and decodes the code data in the header portion. The separation decoding unit 202 decodes tile data information, brick data information, slice data information, and the like shown in Fig. 6, generates information for decoding, and sends it to the image reproduction unit 205. Division of the image stored in the bitstream in this embodiment is as shown in Fig. 8.

From the values of pic_width_in_luma_samples and pic_height_in_luma_samples of image size information, it is found that the image has 1536 × 768 pixels.

Next, since the value of log2_ctu_size_minus2 of basic block data division information is 4, it is found that the size of the basic block is 64 × 64 pixels from 1 << log2_ctu_size_minus2 + 2.

Next, sub-picture division information is acquired. First, since subpics_present_flag is 1, it can be judged that the image is divided into sub-pictures. Next, the information of the maximum number of sub-pictures represented by max_subpics_minus2 is acquired. In this embodiment, when a value 0 is acquired, and 2 is added to this numerical value, it is found that the maximum number of sub-pictures is 2. After that, pieces of basic pixel information of a grid that forms the sub-picture, which are represented by subpic_grid_col_width_minus1 and subpic_grid row height_minus1, are acquired. Then, the numbers of vertical and horizontal grids forming the image, which are represented by NumSubPicGridRows and NumSubPicGridCols, are derived by a predetermined calculation method. In this embodiment, subpic_grid_col_width_minus1 can be acquired as 63, and subpic_gridrow height_minus1 can be acquired as 63.

NumSubPicGridRows and NumSubPicGridCols are calculated by the following equations.

$$NumSubPicGridCols =$$
$$(pic\_width\_in\_luma\_samples +$$
$$subpic\_grid\_col\_width\_minus1*4+3)/$$
$$(subpic\_grid\_col\_width\_minus1*4+4)$$

$$NumSubPicGridRows =$$

$$(pic\_height\_in\_luma\_samples +$$

$$subpic\_grid\_row\_height\_minus1*4+3)/$$

$$(subpic\_grid\_row\_height\_minus1*4+4)$$

In this embodiment, NumSubPicGridCols is derived as 6, and NumSubPicGridRows is derived as 3.

After that, INDEX information representing which sub-picture each grid represented by subpic_grid_idx[i][j] belongs to is acquired as many as the necessary number indicated by NumSubPicGridRows and NumSubPicGridCols. In this embodiment, the number is 18. As for the values, 0 is acquired for [0][0], [0][1], [0][2], [1][0], [1][1], [1][2], [2][0], [2][1], and [2][2]. In addition, 1 is acquired for [0][3], [0][4], [0][5], [1][3], [1][4], [1][5], [2][3], [2][4], and [2][5]. From these pieces of information, it is possible to restore that the image is divided into two sub-pictures, and the two sub-pictures are divided as shown in Fig. 8. It is therefore possible to decode the bitstream that has efficiently encoded the syntax concerning the sub-pictures, which is generated in the first embodiment.

After the information is acquired, pieces of information such as tile data division information and brick data division information necessary for decoding are acquired. The pieces of division information derived from the separation decoding unit 202 are sent to the image reproduction unit 205 and used to specify the positions of data in the image, which are to be processed in step S404.

In step S402, the decoding unit 203 decodes the code data separated in step S401 and reproduces the quantization coefficient and the prediction information. In step S403, the inverse quantization/inverse transformation unit 204 performs inverse quantization for the quantization coefficient to obtain a transformation coefficient, and further performs inverse orthogonal transformation to reproduce the prediction error.

In step S404, the image reproduction unit 205 reproduces the prediction information and the predicted image generated in step S403. The image reproduction unit 205 also reproduces the image data from the reproduced predicted image and the prediction error generated in step S404. The reproduced image data is composited to an appropriate position in the image based on the division information generated in step S401.

In step S405, the image decoding apparatus determines whether decoding of all basic blocks in the frame is ended. If the decoding is ended, the process advances to step S406. Otherwise, the process returns to step S402 to process the next basic block.

In step S406, the in-loop filter unit 207 performs in-loop filter processing for the image data reproduced in step S404 to generate an image that has undergone the filter processing, and the processing is ended.

With the above-described configuration and operation, it is possible to decode the bitstream generated by efficiently encoding the syntax concerning sub-pictures generated in the first embodiment.

Note that in this embodiment, a value obtained by subtracting 2 from the maximum number of sub-pictures is acquired. However, the present invention is not limited to this. Instead, max_subpics_minus1 obtained by subtracting 1 from the maximum number of sub-pictures may be acquired, and when the value is 1 or more, that is, only when the maximum number of sub-pictures is 2 or more, the following information may be acquired. That is, subpic_grid_col_width_minus1, subpic_gridrow_height_minus1, and subpic_grid_idx[i][j] may be acquired. That is, if the maximum number is 1, these pieces of information may not be acquired. This makes it possible to decode a bitstream in which redundant sub-picture information is reduced.

Note that in the above description, when the value of max_subpics_minus1 is 1 or more, that is, only when the maximum number of sub-pictures is 2 or more, the following pieces of information are acquired. That is, the pieces of information of subpic_grid_col_width_minus1, subpic_grid_row_height_minus1, and subpic_grid_idx[i][j] are acquired when the maximum number of sub-pictures is 2 or more. The following two pieces of information may also be acquired when the maximum number of sub-pictures is 2 or more. That is, the two values of subpic_treated_as_flag and loop_filter_across_subpic_enabled_flag may also be acquired only when the value of max_subpics_minus1 is 1 or more. This makes it possible to decode a bitstream in which redundant sub-picture information is further reduced.

Also, in this embodiment, an example in which an image is divided into two sub-pictures has been described. However, the present invention is not limited to this. For example, in the case shown in Fig. 10 in which an image is divided into three sub-pictures, a bitstream created by an encoding method for setting the maximum value of subpic_grid_idx to max_subpics_minus1 or less can also be decoded.

Additionally, in this embodiment, a grid is defined on a four-pixel basis. However, a grid may be defined on a CTU row/column basis. In this case, when restoring the values if subpic_grid_col_width_minus1 and subpic_gridrow_height_minus1, a bitstream whose code amount is decreased can also be decoded by performing calculation based on the basic pixel count of the CTU.

Note that in this embodiment, subpic_grid_idx that is an ID representing the position of the rectangular region of a sub-picture is acquired from the sequence parameter set. However, the present invention is not limited to this. Fig. 11 shows the configuration of a bitstream in which subpic idx as the ID of a corresponding sub-picture is encoded instead in a slice header that is the header of each slice. Fig. 11 shows the configuration of a bitstream in which subpic _idx as the ID of a corresponding sub-picture is encoded instead in a slice header that is the header of each slice. When this configuration is employed, the number of information representing the position of the rectangular region of a sub-picture can be decreased from the number of grids to the number of slices. In the example shown in Fig. 8, the number of grids is 18, and the number of sub-pictures = the number of slices. Hence, since the number of slices is 2, decoding can be performed by acquiring two subpic_idx and calculating the same information as 18 subpic_grid_idx.

Additionally, the embodiment in which subpic_idx is arranged in the slice header has been described. However, the present invention is not limited to this, and the same information as subpic_grid_idx can be decoded even if subpic_idx is arranged in brick code data.

(Third Embodiment)

In the above embodiments, the description has been made assuming that the processing units shown in Fig. 1 or 2 are formed by hardware. However, the processes performed by the processing units shown in these drawings may be configured by a computer program.

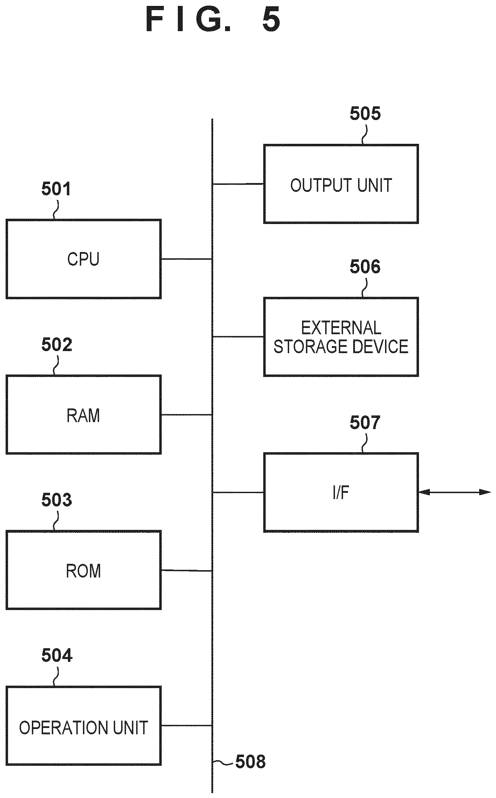

Fig. 5 is a block diagram showing an example of the configuration of hardware of a computer applicable to an image display apparatus according to each embodiment.

A CPU 501 controls the entire computer using computer programs and data stored in a RAM 502 or a ROM 503, and also executes each process described above as processing to be performed by the image processing apparatus according to the above-described embodiments. That is, the CPU 501 functions as the processing units shown in Fig. 1 or 2.

The RAM 502 includes an area configured to temporarily store computer programs and data loaded from an external storage device 506 and data acquired from the outside via an I/F (interface) 507. Also, the RAM 502 includes a work area used by the CPU 501 to execute various kinds of processing. That is, for example, the RAM 502 can be allocated as a frame memory or can appropriately provide various kinds of other areas.

The ROM 503 stores the setting data of the computer, a boot program, and the like. An operation unit 504 is formed by a keyboard, a mouse, and the like. When the user of the computer operates the operation unit 504, various kinds of instructions can be input to the CPU 501. A display unit 505 displays the processing result of the CPU 501. In addition, the output unit 505 is formed by, for example, a liquid crystal display.

The external storage device 506 is a mass information storage device represented by as a hard disk drive. The external storage device 506 stores an OS (Operating System) and computer programs configured to cause the CPU 501 to implement the functions of the units shown in Fig. 1 or 2. The external storage device 506 may also store each image data as a processing target.

The computer programs and data stored in the external storage device 506 are appropriately loaded into the RAM 502 under the control of the CPU 501 and processed by the CPU 501. To the I/F 507, a network such as a LAN or the Internet or another device such as a projecting device or a display device can be connected. The computer can acquire or send various kinds of information via the I/F 507. Reference numeral 508 denotes a bus that connects the above-described units.

As for the operation formed by the above-described configuration, the CPU 501 plays a major role to control the operation described with reference to the above flowcharts.

(Other Embodiments)

The present invention can be implemented by processing of supplying a program for implementing one or more functions of the above-described embodiments to a system or apparatus via a network or storage medium, and causing one or more processors in the computer of the system or apparatus to read out and execute the program. The present invention can also be implemented by a circuit (for example, an ASIC) for implementing one or more functions.

The present invention is not limited to the above embodiments and various changes and modifications can be made within the spirit and scope of the present invention. Therefore, to apprise the public of the scope of the present invention, the following claims are made.

This application claims priority from Japanese Patent Application No. 2019-165580 filed September 11, 2019, which is hereby incorporated by reference herein.

REFERENCE SIGNS LIST

    101, 112, 201, 208: terminal
    102: image division unit
    103: block division unit
    104: prediction unit
    105: transformation/quantization unit
    106, 204: inverse quantization/inverse transformation unit
    107, 205: image reproduction unit
    108, 206: frame memory
    109, 207: in-loop filter unit
    110: encoding unit
    111: integration encoding unit
    202: separation decoding unit
    203: decoding unit

# Claims

1. An image encoding apparatus comprising encoding means for dividing an image into a plurality of sub-pictures and encoding each sub-picture such that each sub-picture can independently be decoded, **characterized by** comprising:

   first decision means for deciding whether each sub-picture that forms the image is defined as only one rectangle;
   second decision means for deciding a basic pixel count that is a vertical/horizontal size of a grid that forms the sub-picture;
   assigning means for assigning a number to each grid divided by the basic pixel count; and
   third decision means for deciding the maximum number of sub-pictures, which is the number of numbers assigned by the assigning means, wherein the sub-picture is a set of grids assigned identical numbers, and a value obtained by subtracting 2 from the maximum number decided by the third decision means is encoded.

2. An image decoding apparatus comprising image decoding means capable of decoding a bitstream including code data obtained by encoding for each of a plurality of sub-pictures, **characterized by** comprising:

   first acquisition means for acquiring, from the bitstream, information representing whether each sub-picture that forms the image includes the only one rectangle;
   second acquisition means for acquiring the maximum number of sub-pictures from the bitstream; and
   third acquisition means for acquiring, from the bitstream, a basic pixel count that is a vertical/horizontal size of a grid that forms the sub-picture,
   wherein a value obtained by adding 2 to a numerical value acquired from the second acquisition means is set to the maximum number of sub-pictures, the number of vertical/horizontal grids that form the image is acquired from the vertical/horizontal size of the grid acquired from third acquisition means, and information representing which sub-picture each grid belongs to is acquired.

3. An image encoding apparatus comprising encoding means for dividing an image into a plurality of sub-pictures and encoding each sub-picture such that each sub-picture can independently be decoded, **characterized by** comprising:

   first decision means for deciding whether each sub-picture that forms the image is defined as only one rectangle;
   second decision means for deciding a basic pixel count that is a vertical/horizontal size of a grid that forms the sub-picture;
   assigning means for assigning a number to each grid divided by the basic pixel count; and
   third decision means for deciding the maximum number of sub-pictures, which is the number of numbers assigned by the assigning means, wherein the sub-picture is a set of grids assigned identical numbers, and only when the maximum number decided by the third decision means is not less than 2, the number and the basic pixel count are encoded.

4. An image decoding apparatus comprising image decoding means capable of decoding a bitstream including code data obtained by encoding for each of a plurality of sub-pictures, **characterized by** comprising:

   first acquisition means for acquiring, from the bitstream, information representing whether each sub-picture that forms the image includes the only one rectangle;
   second acquisition means for acquiring the maximum number of sub-pictures from the bitstream; and
   third acquisition means for acquiring, from the bitstream, a basic pixel count that is a vertical/horizontal size of a grid that forms the sub-picture,
   wherein the sub-picture is a set of grids assigned identical numbers, and only when the maximum number decided by the second acquisition means is not less than 2, the number and the basic pixel count are acquired.

F I G. 1

EP 4 030 759 A1

# FIG. 2

```
          ┌──────────────────────────────────────┐
          │           START ENCODING             │
          └──────────────────────────────────────┘
                           │
          ┌──────────────────────────────────────┐
          │           IMAGE DIVISION             │  S301
          └──────────────────────────────────────┘
                           │
          ┌──────────────────────────────────────┐
          │           BLOCK DIVISION             │  S302
          └──────────────────────────────────────┘
                           │
          ┌──────────────────────────────────────┐
          │             PREDICTION               │  S303
          └──────────────────────────────────────┘
                           │
          ┌──────────────────────────────────────┐
          │      TRANSFORMATION/QUANTIZATION     │  S304
          └──────────────────────────────────────┘
                           │
          ┌──────────────────────────────────────┐
          │  INVERSE QUANTIZATION/INVERSE TRANSFORM │  S305
          └──────────────────────────────────────┘
                           │
          ┌──────────────────────────────────────┐
          │           REPRODUCE IMAGE            │  S306
          └──────────────────────────────────────┘
                           │
          ┌──────────────────────────────────────┐
          │      ENCODE PREDICTION INFORMATION   │  S307
          └──────────────────────────────────────┘
                           │
    NOT YET        ◇──────────────────────────────◇
    ENDED   ←──────  ENDED FOR ALL BLOCKS IN SLICE?   S308
                   ◇──────────────────────────────◇
                           │ END
          ┌──────────────────────────────────────┐
          │      ENCODE DIVISION INFORMATION     │  S309
          └──────────────────────────────────────┘
                           │
    NOT YET        ◇──────────────────────────────◇
    ENDED   ←──────  ENDED FOR ALL BLOCKS IN FRAME?   S310
                   ◇──────────────────────────────◇
                           │ END
          ┌──────────────────────────────────────┐
          │            IN-LOOP FILTER            │  S311
          └──────────────────────────────────────┘
                           │
          ┌──────────────────────────────────────┐
          │            END ENCODING              │
          └──────────────────────────────────────┘
```

F I G. 3

# FIG. 4

```
        START DECODING

    SEPARATE/DECODE BITSTREAM           S401

    DECODE QUANTIZATION COEFFICIENTS/    S402
    PREDICTION INFORMATION

    INVERSE QUANTIZATION/INVERSE TRANSFORM   S403

    REPRODUCE IMAGE                      S404

                                        S405
NOT YET
ENDED    COMPLETED ALL BLOCKS IN FRAME?

                END

    IN-LOOP FILTER                      S406

        END DECODING
```

# F I G. 5

501
CPU

502
RAM

503
ROM

504
OPERATION UNIT

505
OUTPUT UNIT

506
EXTERNAL
STORAGE DEVICE

507
I/F

508

# F I G.  6

BITSTREAM

| SPS | PPS | SLH | BRICK 0 CODE DATA | BRICK 1 CODE DATA | ... | BRICK N-1 CODE DATA |

SPS: SEQUENCE PARAMETER SET

| | ... | IMAGE SIZE INFORMATION | SUB-PICTURE INFORMATION | BASIC BLOCK DATA INFORMATION |

HEADER

| pic_width_in_ luma_samples | pic_height_in_ luma_samples |

| log2_ctu_size_ minus2 |

| subpics_ present_ flag | max_ subpics_ minus2 | subpic_grid_ col_width_ minus1 | subpic_grid_ row_height_ minus1 | subpic_ grid_ idx[i][j] | subpic_treated _as_pic_flag[i] | loop_filter_ across_subpic _enable_flag[i] |

PPS: PICTURE PARAMETER SET

| | ... | TILE DATA INFORMATION | BRICK DATA INFORMATION | SLICE DATA INFORMATION 0 | BASIC BLOCK DATA INFORMATION |

HEADER

SLH: SLICE HEADER

| | ... | SLICE DATA INFORMATION 1 | BASIC BLOCK DATA INFORMATION |

HEADER

BRICK CODE DATA

| BASIC BLOCK ROW 0 CODE DATA | BASIC BLOCK ROW 1 CODE DATA | ... | BASIC BLOCK ROW M-1 CODE DATA |

# FIG. 7

| | | | | | |
|---|---|---|---|---|---|
| 0 | 0 | 2 | 2 | 4 | 4 |
| 0 | 0 | 3 | 3 | 4 | 4 |
| 1 | 1 | 3 | 3 | 4 | 4 |

☐ TILE/GRID (256 x 256)

☐ SUB-PICTURE

☐ PICTURE

# FIG. 8

| | | | | | |
|---|---|---|---|---|---|
| 0 | 0 | 0 | 1 | 1 | 1 |
| 0 | 0 | 0 | 1 | 1 | 1 |
| 0 | 0 | 0 | 1 | 1 | 1 |

☐ GRID (256 x 256)

☐ SUB-PICTURE/SLICE/TILE

☐ PICTURE

# F I G. 9

BITSTREAM

| SPS | PPS | SLH | BRICK 0 CODE DATA | BRICK 1 CODE DATA | ... | BRICK N-1 CODE DATA |

SPS: SEQUENCE PARAMETER SET

| | ... | IMAGE SIZE INFORMATION | SUB-PICTURE INFORMATION | BASIC BLOCK DATA INFORMATION |

HEADER

| pic_width_in_ luma_samples | pic_height_in_ luma_samples |

| log2_ctu_size_ minus2 |

| subpics_ present_ flag | max_ subpics_ minus1 | subpic_grid_ col_width_ minus1 | subpic_grid_ row_height_ minus1 | subpic_ grid_ idx[i][j] | subpic_treated _as_pic_flag[i] | loop_filter_ across_subpic _enable_flag[i] |

PPS: PICTURE PARAMETER SET

| | ... | TILE DATA INFORMATION | BRICK DATA INFORMATION | SLICE DATA INFORMATION 0 | BASIC BLOCK DATA INFORMATION |

HEADER

SLH: SLICE HEADER

| | ... | SLICE DATA INFORMATION 1 | BASIC BLOCK DATA INFORMATION |

HEADER

BRICK CODE DATA

| BASIC BLOCK ROW 0 CODE DATA | BASIC BLOCK ROW 1 CODE DATA | ... | BASIC BLOCK ROW M-1 CODE DATA |

# F I G. 10

| 0 | 0 | 1 | 1 | 2 | 2 |
|---|---|---|---|---|---|
| 0 | 0 | 1 | 1 | 2 | 2 |
| 0 | 0 | 1 | 1 | 2 | 2 |

GRID (256 x 256)

SUB-PICTURE/SLICE/TILE

PICTURE

# F I G. 11

BITSTREAM

| SPS | PPS | SLH | BRICK 0 CODE DATA | BRICK 1 CODE DATA | . . . | BRICK N-1 CODE DATA |

SPS: SEQUENCE PARAMETER SET

| | . . . | IMAGE SIZE INFORMATION | SUB-PICTURE INFORMATION | BASIC BLOCK DATA INFORMATION |

HEADER

| pic_width_in_ luma_samples | pic_height_in_ luma_samples |

| log2_ctu_size_ minus2 |

| subpics_ present_ flag | max_ subpics_ minus2 | subpic_grid_ col_width_ minus1 | subpic_grid_ row_height_ minus1 | subpic_treated _as_pic_flag[i] | loop_filter_ across_subpic _enable_flag[i] |

PPS: PICTURE PARAMETER SET

| | . . . | TILE DATA INFORMATION | BRICK DATA INFORMATION | SLICE DATA INFORMATION 0 | BASIC BLOCK DATA INFORMATION |

HEADER

SLH: SLICE HEADER

| | . . . | SLICE DATA INFORMATION 1 | BASIC BLOCK DATA INFORMATION |

HEADER

| subpic_ idx | . . . |

BRICK CODE DATA

| BASIC BLOCK ROW 0 CODE DATA | BASIC BLOCK ROW 1 CODE DATA | . . . | BASIC BLOCK ROW M-1 CODE DATA |

## INTERNATIONAL SEARCH REPORT

| International application No. |
|---|
| PCT/JP2020/031711 |

A. CLASSIFICATION OF SUBJECT MATTER
H04N 19/436(2014.01)i; H04N 19/70(2014.01)i
FI: H04N19/70; H04N19/436
According to International Patent Classification (IPC) or to both national classification and IPC

B. FIELDS SEARCHED

Minimum documentation searched (classification system followed by classification symbols)
H04N19/00-19/98

Documentation searched other than minimum documentation to the extent that such documents are included in the fields searched
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | BOYCE, Jill, et al., "Sub-pictures and sub-picture sets with level derivation", Joint Video Experts Team (JVET), 25 June 2019, [JVET-O0555-v1] (version 1) abstract, columns 2.2, 3.1 | 1-2<br>3-4 |
| Y | JP 2014-531178 A (QUALCOMM INCORPORATED) 20 November 2014 (2014-11-20) paragraph [0124] | 1-2 |
| P, X | HE, Yong, et al., "AHG12: On subpicture grid syntax", Joint Video Experts Team (JVET), 24 September 2019, [JVET-P0129] (version 1) column 1 | 1-2 |
| P, X | CHANG, Yao-Jen, et al., "AHG12: On subpicture signaling and grid size", Joint Video Experts Team (JVET), 25 September 2019, [JVET-P0432] (version 1) column 2 | 1-2 |

☐ Further documents are listed in the continuation of Box C.     ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 07 October 2020 (07.10.2020) | 20 October 2020 (20.10.2020) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

| INTERNATIONAL SEARCH REPORT | | International application no. | |
|---|---|---|---|
| Information on patent family members | | PCT/JP2020/031711 | |
| Patent Documents referred in the Report | Publication Date | Patent Family | Publication Date |
| JP 2014-531178 A | 20 Nov. 2014 | US 2013/0101035 A1 paragraph [0131] WO 2013/063094 A1 CN 103975596 A KR 10-2014-0085539 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014011638 A

- JP 2019165580 A